# EUROPEAN PATENT APPLICATION

(11) **EP 2 264 854 A1**
(43) Date of publication of application: **22.12.2010**
(21) Application number: 10165140.4
(22) Date of filing: 07.06.2010
(51) Int. Cl.: H02J 7/00, H01R 13/00

(54) **A device for recharging portable electronic equipment**

(30) Priority: 16.06.2009 IT MI20091059
(71) Applicant: Garzulino, Massimo, 28845 Domodossola (verbania) (IT); Spano, Danilo, 28845 Domodossola (Verbania) (IT)
(72) Inventor: Garzulino, Massimo, 28845 Domodossola (verbania) (IT); Spano, Danilo, 28845 Domodossola (Verbania) (IT)
(74) Representative: Corradini, Corrado

(57) **Abstract**

A device for recharging portable electronic equipment comprises a battery charger for connecting to the electricity network, an electric cable for establishing an electrical connection between the battery charger and the portable electronic equipment, the electric cable being provided with a connector for interfacing with the portable electronic equipment. The device also comprises a box body for wall-installation, the box body being large enough to house the battery charger and by a support device for supporting the electric cable and for enabling it to be wound and unwound.

## Description

The invention relates to a device for recharging electronic equipment, such as mobile telephones, laptops, PDA and similar electronic equipment.

Hereinbelow, for reasons of simplicity, reference will be made only to a mobile telephone, in indicating an electronic apparatus to be recharged, without in any way limiting the present invention to such an application only.

As is known, mobile telephones have an internal battery which supplies the various devices that enable the mobile telephone to function; this battery has to be periodically recharged by the user.

The recharging takes place when the mobile telephone is connected, through a supply cable fitted with a connector or jack, to a battery charger which has to be connected to the electricity network.

A problem that often arises when using mobile telephones is that it is necessary to have a battery charger whenever the mobile telephone needs recharging. Consequently, in many situations, for example when travelling or when at work or at home, it is necessary to make sure that a battery recharger is available. It may however happen that one forgets or loses it.

The aim of the invention is therefore to solve the abovementioned problem thanks to a device for recharging portable electronic equipment, such as mobile telephones or similar equipment, which is always available for use.

A further aim of the invention is to attain the above aim in an rational and economical way.

The aims are attained thanks to a device for recharging portable electronic equipment comprising a battery charger for connecting to the electricity network, an electric cable for establishing an electrical connection between the battery charger and the portable electronic equipment, the electric cable being provided with a connector to interface with the portable electronic equipment, **characterized in that** the device further comprises a box body for installatin in a wall and which affords sufficient volume for housing the battery charger and a support device for supporting the electrical cable such that it can be wound and unwound.

Further advantageous characteristics of the invention are set out in the dependent claims.

Further characteristics and advantages of the invention will emerge from reading the detailed description that follows, given by way of non-limiting example, illustrated in the figures of the accompanying tables of drawings, in which:

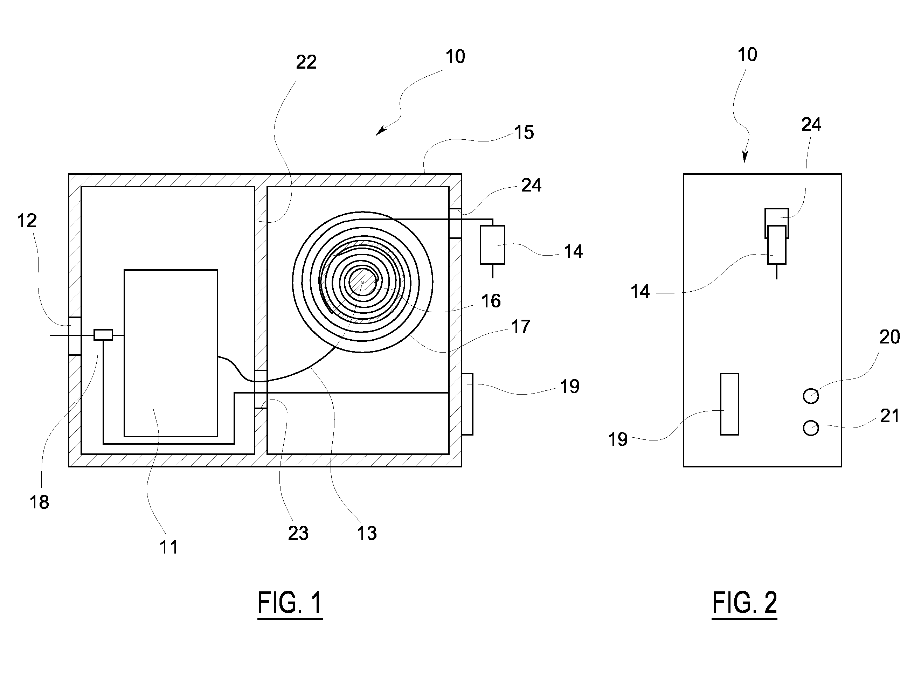

figure 1 illustrates a sectioned view along a vertical plane of the device for recharging portable electronic equipment, according to the invention;

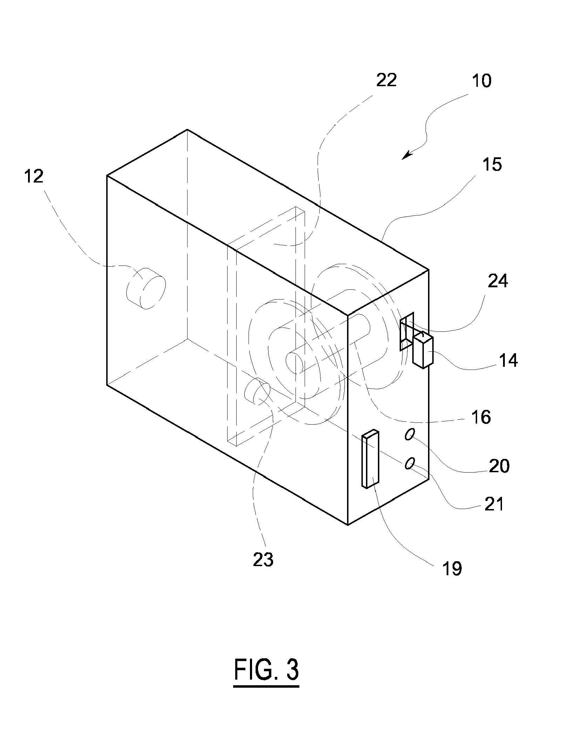

figure 2 illustrates a frontal view of the device of figure 1; and figure 3 illustrates an axonometric view of some components of the device of the preceding figures.

The figures illustrate a device for recharging portable electronic equipment,denoted in its entirety by number 10.

The device 10 comprises a battery charger 11 destined to be connected to an electricity network (at point 12), an electric cable 13 for establishing an electrical connection between the battery charger 11 and a unit of portable electronic equipment (not illustrated for reasons of simplicity).

The electric cable 13 is fitted with a connector 14 for interfacing with the portable electronic equipment and enabling its recharging.

The device 10 also comprises a box body 15 to be installed in a wall and which is to host both the battery charger 11, and a support device 16 for supporting the electric cable 13 and for enabling its winding and unwinding.

In particular, the electric cable 13 when not in use is wound in a spiral (at point 17) for at least part of its length so that it can fit in the box body 15, while should it be needed for use the cable can be unwound at least in part from its spiral and neared to the connector 14 in order to be inserted into the electronic equipment requiring supply. In particular, the support device for the electric cable is fitted with a spiral spring for winding the electric cable.

Preferably the battery charger 11 is fitted with a switch 18, operated via a button 19, so that it can be connected to the electricity network when necessary; further the switch can be fitted with a timer which cuts off the electrical supply of the battery charger after a set time to avoid wasting electricity.

### Optionally, LEDs 20, 21 can be provided for indicating the status of the device.

The internal volume of the box body 15 can be divided into two parts by a holed dividing wall 22 (at point 23), where a first section contains the battery charger 11 and a second part contains the support device 16 for supporting the spiral-wound electric cable.

In a variant of the invention, the connector 14 can be covered inside a compartment fitted with a hatch to protect it from impacts, dust or other.

As the description above illustrates, the wall-installation of the box body means that the battery charger for the mobile telephone battery is always available for the user.

Among the advantages of the invention is the fact that should the law provide for the use of only one type of connector for electronic equipment, particularly for mobile telephones, the device makes the use of that single connector very readily available to users.

### Should two or more connectors be needed, two o more devices according to the invention can be used.

The invention can be applied with particular advantages in situations such as hotels, hospitals, barracks or any other place where it is possible to install the described device in a wall.

The problems resulting from possible forgetfulness or loss of the battery charger in this way are eliminated.

Obviously modifications or improvements dictated by contingent or special motivations can be brought to the invention as it is described herein above, without its forsaking the ambit of the invention as claimed herein below.

## Claims

1. A device for recharging portable electronic equipment, comprising a battery charger for connecting to an electricity network, an electric cable for establishing an electrical connection between the battery charger and the portable electronic equipment, the electric cable being provided with a connector for interfacing with the portable electronic equipment, **characterised in that** the device further comprises a box body destined to be installed in a wall, the box body exhibiting sufficient volume for housing the battery charger and a support device for the electric cable and for winding and unwinding thereof.

2. The device of claim 1, wherein the support device for the electric cable is fitted with a spiral spring for enabling the winding of the electric cable.

3. The device of claim 1, wherein the connector is covered inside a compartment provided with a hatch that can be opened.

4. The device of claim 1, wherein the volume inside the box body is divided into two parts by a holed separating wall.

5. The device of claim 1, wherein the battery charger is fitted with a switch operated via a button, such as to be connectable to the electricity network when necessary.

6. The device of claim 5, wherein the switch is fitted with a timer which cuts off the electrical supply to the battery charger after a set time to avoid a waste of electricity.

7. The device of the preceding claims, wherein the portable electronic equipment is a mobile telephone, or a laptop or a PDA.
